Europäisches Patentamt

European Patent Office

Office européen des brevets

(11) Publication number: **0 287 296 B1**

## EUROPEAN PATENT SPECIFICATION

(45) Date of publication of patent specification: **01.07.92**

(51) Int. Cl.⁵: **F16C 33/62**, F16C 35/06

(21) Application number: **88303199.9**

(22) Date of filing: **11.04.88**

(54) Ceramic bearing construction.

(30) Priority: **13.04.87 JP 90375/87**

(43) Date of publication of application:
**19.10.88 Bulletin 88/42**

(45) Publication of the grant of the patent:
**01.07.92 Bulletin 92/27**

(84) Designated Contracting States:
**DE FR GB**

(56) References cited:
DE-A- 2 555 923
GB-A- 885 331
US-A- 4 428 628
US-A- 4 634 300

(73) Proprietor: **ISHIKAWAJIMA-HARIMA JUKOGYO KABUSHIKI KAISHA**
**2-1, Ote-machi 2-chome**
**Chiyoda-ku Tokyo 100(JP)**

Proprietor: **KABUSHIKI KAISHA TOSHIBA**
**72, Horikawa-cho Saiwai-ku**
**Kawasaki-shi Kanagawa-ken 210(JP)**

Proprietor: **KOYO SEIKO KABUSHIKI KAISHA**
**No. 2, Unagidani-Nishinocho Minami-ku**
**Osaka-shi Osaka-fu(JP)**

(72) Inventor: **Yamashita, Yuko**
**No. 151-11, Kume**
**Tokorozawa-shi Saitama-ken(JP)**
Inventor: **Masumoto, Yuji**
**No. 4-25-6-605, Higashi-Koigakubo**
**Kokubunji-shi Tokyo-to(JP)**
Inventor: **Kimura, Takao**
**Ihi Tanashiryo No. 3-5-1, Mukodai-cho**
**Tanashi-shi Tokyo, to(JP)**
Inventor: **Nishida, Katsutoshi**
**No.6-35-16, Sasage Konan-ku**
**Yokohama-shi Kanagawa-ken(JP)**
Inventor: **Inoue, Koichi Okurayama 2nd Corporous A-601**
**No. 925-1, Mamedo-cho Kohoku-ku**
**Yokohama-shi Kanagawa-ken(JP)**
Inventor: **Rokkaku, Kasuo**
**No. 12-1-609, Ikutama-cho Tennouji-ku**
**Osaka-shi Osaksa-fu(JP)**
Inventor: **Takebayashi, Hiroaki**
**No. 1-7-2-1137, Hirano-Miyamachi§Hirano-ku**
**Osaka-shi Osaka-fu(JP)**

(74) Representative: **Jennings, Nigel Robin et al**
**KILBURN & STRODE 30 John Street**
**London WC1N 2DD(GB)**

## Description

The present invention relates to a ceramic bearing construction for use in aircraft engines and other industrial rotary machines and is concerned with that type of ceramic bearing construction, as disclosed in US-A-4 634 300, which comprises a ceramic inner race which extends around a metallic shaft, a ceramic outer race and a plurality of balls or rollers disposed between the inner and outer races.

In the fields of aircraft engines and other industrial rotary machines, ceramic bearings have been proposed for use under severe high-temperature and high-velocity operating conditions.

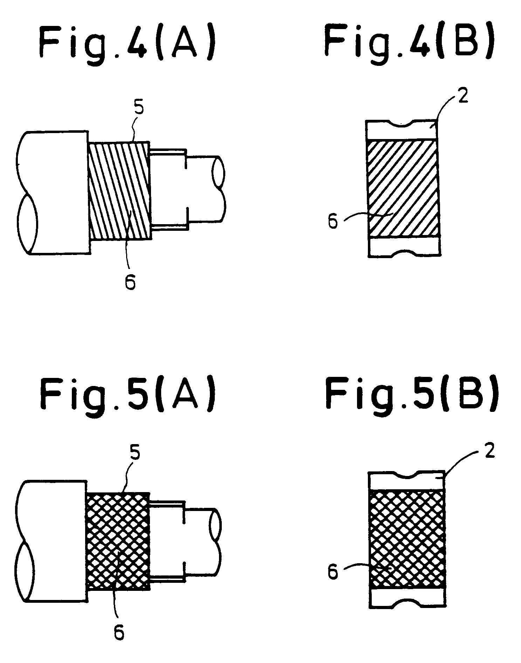

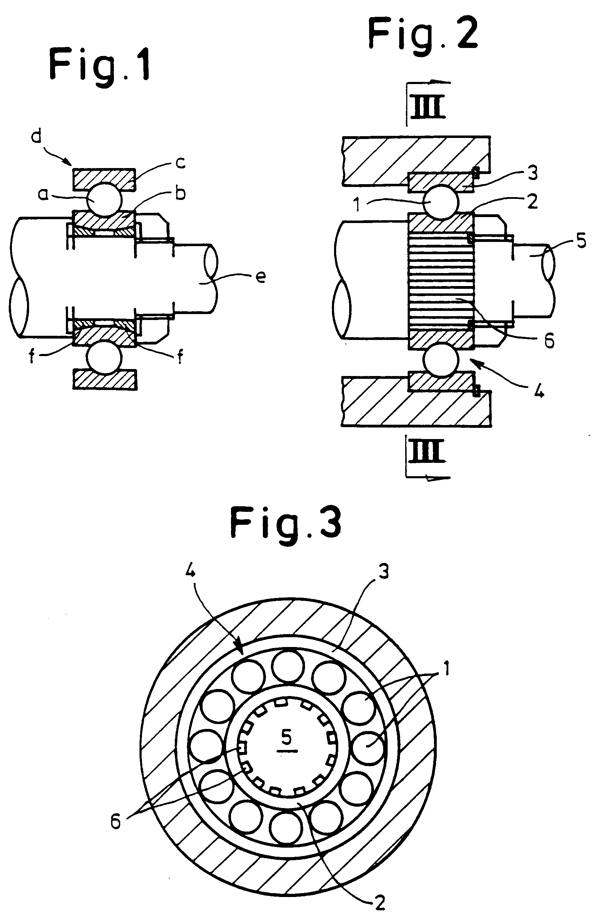

Figure 1 is a sectional side elevation of one example of a conventional ceramic bearing. The ceramic bearing d is mounted on a metal shaft e and comprises an inner race b, an outer race c and a plurality of balls a interposed between the races b and c. Metal taper rings f are interposed between the ceramic inner race b and the metal shaft e to absorb differences in thermal expansion between the assembled and operative conditions of the ceramic bearing so as to prevent cracking of the latter.

In a ceramic bearing of the type described above, differences in thermal expansion between the ceramic inner race b and the metal shaft e are absorbed by axial displacement of the taper rings f, whereby circumferential and radial stresses which tend to cause cracking of the ceramic inner race b are reduced to moderate values.

However, ceramic bearings of the type described above suffer from the following problems:

(a) Due to friction caused by the initial tightening force between the ceramic inner race b and the metal shaft e, the taper rings f tend to stick and thus fail to be axially displaced, thereby resulting in low reliability of the bearing.

(b) It is difficult to position the pairs of taper rings f with respect to one another.

(c) The taper rings f and the corresponding tapered portions of the ceramic inner race b must be machined highly accurately so that there is a relatively large number of component parts which requires accurate machining which results in an increase in the cost of the bearings.

It is an object of the present invention to overcome the above and other problems encountered in conventional ceramic bearings and to provide a ceramic bearing in which, without an increase in the number of component parts, the circumferential and radial stresses caused by differences in thermal expansion between the ceramic inner race and the metal shaft can be relieved so as to prevent cracking of the ceramic inner race.

According to the present invention, a ceramic bearing construction of the type referred to above is characterised in that the inner race has an internal diameter slightly less than the outer diameter of the shaft and is shrink-fitted onto the shaft and that the internal surface of the inner race and/or that portion of the outer surface of the shaft within the inner race has a plurality of recesses, preferably one or more series of grooves, formed therein.

Thus in the bearing construction of the present invention the area of contact between the shaft and the inner race is reduced, e.g. by 30% or 50%, whereby the forces produced by differential expansion of the shaft and the inner race may be accommodated without resulting in cracking of the inner race.

Further features, details and advantages of the present invention will be apparent from the following description of certain preferred embodiments thereof which is given with reference to Figures 2 to 5 of the accompanying drawings, in which:-

Figure 2 is a section side view of a first embodiment of the invention;

Figure 3 is a sectional view on the line III-III in Figure 2;

Figures 4(A) and 4(B) are views illustrating modified embodiments in which grooves are machined in the outer periphery of the metal shaft and the inner periphery of the ceramic inner race, respectively; and

Figures 5(A) and 5(B) are views illustrating further modifications with intersecting grooves in the outer periphery of the metal shaft and the inner periphery of the ceramic inner race, respectively.

Referring to Figures 2 and 3, the ceramic bearing 4 comprises a ceramic inner race 2, a ceramic outer race 3 and a plurality of balls 1 interposed therebetween. The bearing is shrink-fitted over a metal shaft 5 and thus securely retained in position. More specifically, for the purpose of preventing the inner race 2 from being separated from the metal shaft 5 during assembly or operation, the outer diameter of the metal shaft 5 is slightly greater than the inner diameter of the inner race 2 and the two components are assembled together by heating the ceramic bearing 4 and then fitting it over the metal shaft 5.

In this embodiment, a plurality of equispaced axially extending grooves 6 are machined in the outer periphery of the metal shaft 5 beneath the inner race prior to the ceramic bearing 4 being shrink-fitted over the metal shaft 5. Alternatively or additionally the grooves may be provided in the inner surface of the inner race 2.

The grooves 6 may be in a variety of forms, such as serrations, knurls, teeth, screw threads, cross stripes or the like. Figures 4(A) and 4(B) illustrate embodiments in which the grooves 6 are helical, i.e. are in the form of screw threads and are formed in the outer periphery of the metal shaft 5 and in the inner surface of the inner race 2, respectively. Figures 5(A) and 5(B) illustrate embodiments in which the grooves 6 are in the form of cross stripes, that is to say two intersecting sets of parallel grooves, and are formed in the outer periphery of the metal shaft 5 and in the inner periphery of the inner race 2, respectively.

As mentioned above, the grooves 6 may be machined in the outer periphery of the metal shaft 5 or in the inner periphery of the ceramic inner race 2, or both.

The metal shaft 5 and the ceramic bearing 4 shrink-fitted thereon do of course become hot during operation. The diameter of the metal shaft 5 thus tends to become larger and the inner race 2 tends to resist such thermal expansion of the metal shaft 5 since the coefficient of thermal expansion of metal is about three times as high as that of ceramic material. As a consequence, the circumferential and radial stresses between the inner race 2 and the metal shaft 5 would increase beyond the allowable limit, if no countermeasure were taken, thus causing cracking of the latter. However, according to the present invention, although the ceramic inner race 2 is in direct contact with the metal shaft 5, the area of contact between them is decreased by the grooves 6 so that the circumferential and radial thermal stresses due to the differences in thermal expansion during assembly and operation are relieved, dissipated and reduced. Reduction of the thermal stresses permits sufficient mechanical strength of the ceramic bearing against impacts and vibrations to be maintained. The bearing of the present invention also has a reduced number of components for which precise machining accuracy is essential as compared to known ceramic bearings.

## Claims

1. A ceramic bearing construction comprising a ceramic inner race (2) which extends around a metallic shaft (5), a ceramic outer race (3) and a plurality of balls or rollers (1) disposed between the inner and outer races (2,3), characterised in that the inner race (2) has an internal diameter slightly less than the outer diameter of the shaft (5) and is shrink-fitted onto the shaft (5), and that the internal surface of the inner race (2) and/or that portion of the outer surface of the shaft (5) within the inner race has a plurality of recesses (6) formed therein.

2. A construction as claimed in claim 1, characterised in that the recesses comprise one or more series of grooves (6).

3. A construction as claimed in claim 2, characterised in that the grooves (6) extend parallel to the axis of the shaft (5)

4. A construction as claimed in claim 2, characterised in that the grooves (6) are in the form of screw threads.

5. A construction as claimed in claim 2, characterised in that the grooves (6) are in the form of two series of intersecting grooves.

6. A construction as claimed in any one of claims 2 to 5 characterised in that the grooves (6) of the or each series of grooves extend parallel to one another.

## Revendications

1. Construction de palier céramique comprenant une bague de roulement céramique intérieure (2) qui s'étend autour d'un arbre métallique (5), une bague de roulement céramique extérieure (3) et une pluralité de billes ou de rouleaux (1) disposés entre les bagues de roulement intérieure et extérieure (2, 3), caractérisée par le fait que la bague de roulement intérieure (2) présente un diamètre intérieur légèrement inférieur au diamètre extérieur de l'arbre (5), et qu'elle est frettée sur l'arbre (5), et par le fait que la surface intérieure de la bague de roulement intérieure (2) et/ou la partie de la surface extérieure de l'arbre (5) qui est située à l'intérieur de la bague de roulement intérieure comporte une pluralité d'évidements (6) qui y sont formés.

2. Construction selon la revendication 1, caractérisée par le fait que les évidements comprennent une ou plusieurs séries de rainures (6).

3. Construction selon la revendication 2, caractérisée par le fait que les rainures (6) s'étendent parallèlement à l'axe de l'arbre (5).

4. Construction selon la revendication 2, caractérisée par le fait que les rainures (6) présentent la forme de filetages.

5. Construction selon la revendication 2, caractérisée par le fait que les rainures (6) présentent la forme de deux séries de rainures qui s'entrecroisent.

6. Construction selon l'une quelconque des revendications 2 à 5, caractérisée par le fait que les rainures (6) de la série ou de chaque série de rainures s'étendent parallèlement entre elles.

**Patentansprüche**

1. Keramische Lageranordnung, umfassend einen keramischen inneren Laufring (2), der sich um eine Metallwelle (5) erstreckt, einen keramischen äußeren Laufring (3) und eine zwischen dem inneren und dem äußeren Laufring (2,3) befindliche Mehrzahl von Kugeln oder Rollen (1), dadurch gekennzeichnet, daß der innere Laufring (2) einen Innendurchmesser aufweist, der geringfügig kleiner als der Außendurchmesser der Welle (5) ist, und auf der Welle (5) aufgeschrumpft ist, und daß in der inneren Oberfläche des inneren Laufrings (2) und/oder in dem innerhalb des inneren Laufrings liegenden Teil der äußeren Oberfläche der Welle (5) eine Mehrzahl von Rücksprüngen (6) ausgeformt ist.

2. Anordnung nach Anspruch 1, dadurch gekennzeichnet, daß die Rücksprünge eine oder mehrere Serien von Rillen (6) umfassen.

3. Anordnung nach Anspruch 2, dadurch gekennzeichnet, daß die Rillen (6) sich parallel zur Achse der Welle (5) erstrecken.

4. Anordnung nach Anspruch 2, dadurch gekennzeichnet, daß die Rillen (6) die Form von Gewindegängen haben.

5. Anordnung nach Anspruch 2, dadurch gekennzeichnet, daß die Rillen (6) in der Form zweier sich schneidender Serien von Rillen ausgebildet sind.

6. Anordnung nach einem der Ansprüche 2 bis 5, dadurch gekennzeichnet, daß die Rillen (6) der oder jeder Serie sich parallel zueinander erstrecken.

EP 0 287 296 B1

# Fig.4(A)

5

6

# Fig.4(B)

2

6

# Fig.5(A)

5

6

# Fig.5(B)

2

6

5

EP 0 287 296 B1

# Fig.1

# Fig.2

# Fig.3